# EUROPEAN PATENT APPLICATION

(11) **EP 2 495 935 A1**
(43) Date of publication of application: **05.09.2012**
(21) Application number: 11179690.0
(22) Date of filing: 01.09.2011
(51) Int. Cl.: H04L 29/08

(54) **Server, system, and method for offering distributed service**

(30) Priority: 04.03.2011 KR 20110019362
(71) Applicant: Samsung Electronics Co., Ltd., Suwon-si Gyeonggi-do 442-742 (KR)
(72) Inventor: Kim, Ki-yong, Gyeonggi-do (KR); Kang, Chun-un, Seoul (KR); Yang, Ki-young, Gyeonggi-do (KR)
(74) Representative: Robinson, Ian Michael

(57) **Abstract**

A server, system and method for offering a distributed service are provided. The service distribution server (100) includes: a first communication unit which communicates with a client (200-1,200-2,200-3,...,200-N); a second communication unit which communicates with a plurality of external devices (300-1,300-2,300-3,...,300-N) which respectively provide a plurality of services; and a first controller which selects one among the plurality of services based on information about the client and a requested service if receiving a service request (401,411,421,431) from the client, and controls the first communication unit and the second communication unit to cause an external device providing the selected service (403,434) among the plurality of external devices implement the requested service.

## Description

### BACKGROUND

### Field

Aspects of the exemplary embodiments relate to a server, system, and method for offering distributed services.

### Description of the Related Art

As many kinds of electronic devices can access the Internet, services working together with Internet services have recently been supported. The Internet services working together with the electronic devices are not only increased in number but are also complicated. Thus, the role of a server providing the Internet services is increasing.

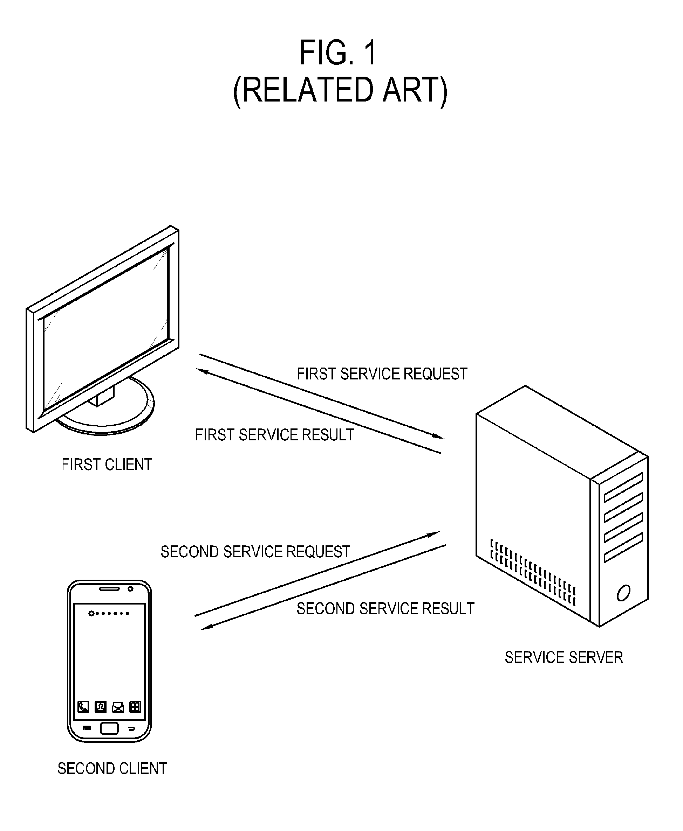

FIG. 1 is a schematic view of a service providing system using a related art service server. As shown in FIG. 1, a first client requests a first service to the service server and receives a first service result, and a second client requests a second service to the service server and receives a second service result. That is, the related art service server provides a plurality of services to a plurality of clients. Therefore, the conventional service server has the following shortcomings: i) if one of provided services is complicated, the service server is burdened with a lot of operations in which decreases its efficiency of providing other services, ii) if one of provided services is improperly designed, it has an adverse effect on providing other services, and iii) if one of provided services is modified due to an error or the like reasons, or upgraded or updated in version, or if a new service is added, the service server has to be stopped and reset. Thus, there is a problem that all the existing services provided by the service server have to be also interrupted.

### SUMMARY

According to the present invention there is provided an apparatus and method as set forth in the appended claims. Other features of the invention will be apparent from the dependent claims, and the description which follows. One or more exemplary embodiments provide a server, system, and method for distributing services.

According to one aspect of an exemplary embodiment, there is provided a service distribution server including: a first communication unit which communicates with a client; a second communication unit which communicates with a plurality of external devices which respectively provide a plurality of services; and a first controller which selects one among the plurality of services on the basis of information about the client and a requested service if receiving a service request from the client, and controls the first communication unit and the second communication unit to cause an external device providing the selected service among the plurality of external devices implement the requested service.

The first controller may control the second communication unit to transmit the service request to an external device providing the selected service and receive from the external device a service result corresponding to the request, and controls the first communication unit to transmit the received service result to the client.

The first controller may control the first communication unit to transmit information about an external device providing the selected service to the client, and the client directly transmits the service request to the external device and directly receives a service result corresponding to the request.

The service distribution server may further include a first storage unit which stores information about the client and information about the plurality of services, wherein the information about the client includes at least one of identification information, location information, and embedded program information of the client, and the information about the plurality of services includes at least one of a list of the plurality of services, the kinds of the plurality of services, and information about the plurality of external devices providing the plurality of services.

The list of the plurality of services may be categorized with respect to at least one of the kind of service, countries to which the client belongs, languages set to the client, and the kind of devices to which the client belongs.

The first controller may control the first communication unit to request and receive an identification number of the client when receiving a service request from the client, and controls the first storage unit to collect information about the client on the basis of the received identification number of the client.

The first controller may control the first storage unit to store information about the plurality of services in response to a request when receiving the request for registering the plurality of corresponding services from the plurality of external devices.

The first controller may control the first storage unit to update information about a service in accordance with modification if one of the plurality of external device modifies a corresponding service previously stored in the first storage unit.

The service may include at least one of a provision of contents and an update of contents, and the contents may include at least one of a widget, an application, a firmware, a software program; digital contents, and multimedia contents.

According to an aspect of another exemplary embodiment, there is provided a service distribution system including: a plurality of external devices which respectively provide a plurality; and a service distribution server comprising a first communication unit which communicates with a client, a second communication unit which communicates with the plurality of external devices which respectively provide the plurality of services, and a first controller which selects one among the plurality of services on the basis of information about the client and a requested service if receiving a service request from the client, and controls the first communication unit and the second communication unit to cause an external device providing the selected service among the plurality of external devices to implement the requested service.

The service distribution server may further include a first storage unit which stores information about the client and information about the plurality of services, wherein the information about the client includes at least one of identification information, location information, and embedded program information of the client, and the information about the plurality of services includes at least one of a list of the plurality of services, the kinds of the plurality of services, and information about the plurality of external devices providing the plurality of services.

The list of the plurality of services may be categorized with respect to at least one of the kind of service, countries to which the client belongs, languages set to the client, and the kind of devices to which the client belongs.

The first controller may control the first communication unit to request and receive an identification number of the client when receiving a service request from the client, and controls the first storage unit to collect information about the client on the basis of the received identification number of the client.

Each of the plurality of external devices may include a third communication unit which communicates with the service distribution server; and a second storage unit which stores data about a corresponding service.

Each of the plurality of external devices may include a second controller which controls the third communication unit to transmit a service result obtained by implementing a service corresponding to a service request to the service distribution server if receiving the service request of the client from the service distribution server through the third communication unit.

Each of the plurality of external devices may include a fourth communication unit which communicates with the client, and the second controller may control the fourth communication unit to transmit a service result obtained by implementing a service corresponding to a service request to the client if receiving the service request of the client from the fourth communication unit.

The second controller may control the third communication unit to transmit a request for registering the service to the service distribution server.

The second controller may control the third communication unit to transmit a request to the service distribution server for updating the registered service in accordance with a modification if data corresponding to the service stored in the second storage unit is modified.

The service may include at least one of a provision of contents and an update of contents, and the contents may include at least one of a widget, an application, a firmware, a software program; digital contents, and multimedia contents.

According to an aspect of another exemplary embodiment, there is provided a method of controlling a service distribution server communicating with a client and a plurality of external devices which respectively provide a plurality of services, the method including: receiving a service request from a client; selecting one of the plurality of services on the basis of information about the client and the requested service; and controlling an external device which provides the selected service among the plurality of external devices to implement the requested service.

The controlling may include transmitting the service request to the external device providing the selected service; receiving from the external device a service result corresponding to the request from the external device; and transmitting the received service result to the client.

The controlling may include controlling transmitting information about an external device which provides the selected service to the client, and the client can directly transmitting the service request to the external device and directly receiving a service result corresponding to the request.

The method may further include storing information about the client and information about the plurality of services, wherein the information about the client includes at least one of identification information, location information, and embedded program information of the client, and the information about the plurality of services includes at least one of a list of the plurality of services, the kinds of the plurality of services, and information about the plurality of external devices providing the plurality of services.

The list of the plurality of services may be categorized with respect to at least one of the kind of service, countries to which the client belongs, languages set to the client, and the kind of devices to which the client belongs.

The receiving the service request may include requesting and receiving an identification number of the client requesting the service; and collecting information about the client on the basis of the received identification number of the client.

The method may further include storing information about the plurality of services in response to a request when receiving the request for registering the plurality of corresponding services from the plurality of external devices.

The method may further include updating information about a service in accordance with a modification if one of the plurality of external device modifies the previously-registered corresponding service.

The service may include at least one of a provision of contents and an update of contents, and the contents may include at least one of a widget, an application, a firmware, a software program, digital contents, and multimedia contents.

According to an another aspect of another exemplary embodiment, there is provided a method of controlling a service distribution system including a client, a service distribution server, and a plurality of external devices which respectively provide a plurality of services, the method including a client, a service distribution server, and a plurality of external devices which respectively provide a plurality of services, may include: by the service distribution server, receiving a service request from a client; by the service distribution server, selecting one of the plurality of services on the basis of information about the client and the requested service; and by the external device providing the selected service among the plurality of external devices, implementing the requested service.

The method may further include by the service distribution server, transmitting a service request received from a client to an external device providing the selected service, and receiving a service result corresponding to the request; and by the service distribution server, transmitting the received service result to the client.

The method may further include by the service distribution server, transmitting information about the external device providing the selected service to the client; by the client, directly transmitting the service request to the external device; and by the client, directly receiving from the external device the service result corresponding to the service request.

The method may further include by the service distribution server, storing information about the client and information about the plurality of services, wherein the information about the client includes at least one of identification information, location information, and embedded program information of the client, and the information about the plurality of services includes at least one of a list of the plurality of services, the kinds of the plurality of services, and information about the plurality of external devices providing the plurality of services.

The list of the plurality of services may be categorized with respect to at least one of the kind of service, countries to which the client belongs, languages set to the client, and the kind of devices to which the client belongs.

The service may include at least one of a provision of contents and an update of contents, and the contents may include at least one of a widget, an application, a firmware, a software program; digital contents, and multimedia contents.

### BRIEF DESCRIPTION OF THE DRAWINGS

The above and/or other aspects will become apparent and more readily appreciated from the following description of exemplary embodiments, taken in conjunction with the accompanying drawings, in which:

FIG. 1 is a schematic view of a service providing system using a related art service server;

FIG. 2 is a schematic view of a service distribution system according to an exemplary embodiment;

FIG. 3 is a control block diagram of a service distribution server according to an exemplary embodiment;

FIG. 4 is a control block diagram of an external device providing a service according to an exemplary embodiment;

FIG. 5 is a flowchart illustrating a control operation of a service distribution system according to an exemplary embodiment; and

FIG. 6 is a flowchart illustrating a control operation of a service distribution system according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. In this detailed description, the term "unit" denotes a hardware component and/or a software component that is executed by a hardware component such as a processor

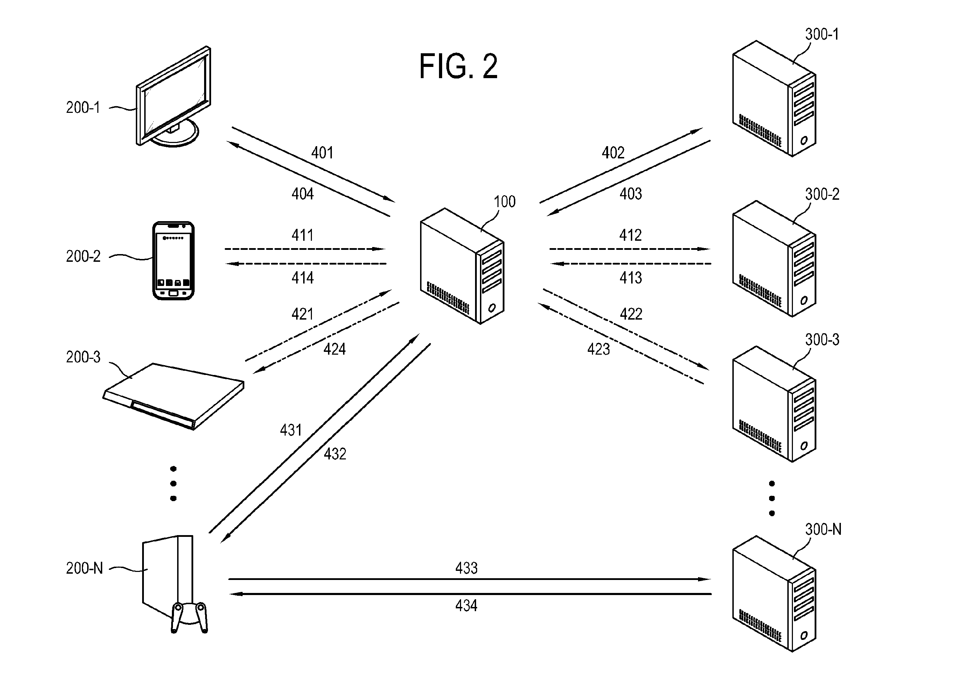

FIG. 2 is a schematic view of a service distribution system according to an exemplary embodiment. Referring to FIG. 2, the service distribution system includes a service distribution server 100, one or more clients 200-1 to 200-N, and a plurality of external devices 300-1 to 300-N. Hereinafter, one or a plurality of the one or more clients 200-1 to 200-N is referred to generally as the client 200 unless a specific client is identified, and one or a plurality of the plurality of external devices 300-1 to 300-N is referred to as the external device 300 unless a specific external device is identified.

The client 200 and the service distribution server 100 are connected through one or more predetermined communication units, and transmit and receive various control signals and data through the one or more communication units. In this exemplary embodiment, the client 200 requests a predetermined service to the service distribution server 100, and the service distribution server 100 transmits a service result corresponding to the request to the client 200, or allows the client 200 to directly receive the service result from the external device 300.

The client 200 may include any electronic device capable of requesting a service based on Internet. For example, the client 200 may include an Internet protocol television (IPTV); a personal digital assistant (PDA) such as a smart phone, a portable multimedia player (PMP), a pocket personal computer (PC), etc.; a PC such as a tablet PC, a Netbook, etc.; and a home appliance such as a refrigerator, etc. regardless the kind of electronic device as long as it can request the Internet based service.

The external device 300 may include any device capable of providing a service. As a representative example of the external device 300, there is a server. The external device 300 can provide at least one service, and may provide a plurality of services. In this exemplary embodiment, the service distribution system includes a plurality of external devices 300 providing at least one service.

According to an exemplary embodiment, when receiving a service request from the client 200, the service distribution server 100 searches a plurality of services and selects one service on the basis of the corresponding client 200 and the requested service, transmits the service request to the external device 300 providing the selected service, and receives a service result corresponding to the request and transmits it to the client 200.

As shown in FIG. 2, if the service distribution server 100 receives a first service request from a first client 200-1 (401), the service distribution server 100 selects one among the plurality of services registered to the service distribution server 100 on the basis of information about the first client 200-1 and the requested first service. The plurality of services registered to the service distribution server 100 are services provided by the first, second, third, ... N external devices 300-1, 300-2, 300-3, ..., 300-N, respectively.

If the external device providing the selected service is the first external device 300-1, the service distribution server 100 transmits the first service request to the first external device 300-1 (402), receives the first service result corresponding to the first service request from the first external device 300-1 (403), and transmits it to the first client 200-1 (404).

Operations of the service distribution server 100 may be equally applied to the second and third service requests (411 and 421) received from the second and third clients 200-2 and 200-3.

According to another exemplary embodiment, when receiving a service request from the client 200, the service distribution server 100 searches a plurality of services and selects one service on the basis of the corresponding client 200 and the requested service, and sends the client 200 information about the external device 300 providing the selected service, so that the client 200 can directly request the service to and receive a service result from the external device 300.

As shown in FIG. 2, if the service distribution server 100 receives an N service request from the N client 200-N (431), the service distribution server 100 selects one service among the plurality of services registered to the service distribution server 100 on the basis of information about the N client 200-N and the requested N service. If the external device providing the selected service is the N external device 300-N, the service distribution server 100 transmits the information about the N external device 300-N to the N client 200-N (432), and the N client 200-N directly requests an N service to the N external device 300-N (433) and directly receives an N service result from the N external device 300-N (434).

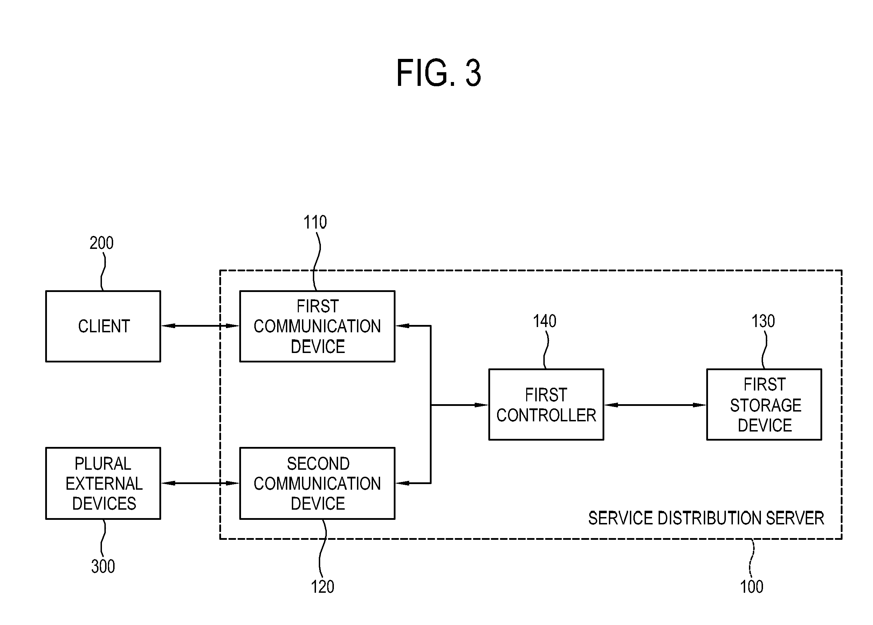

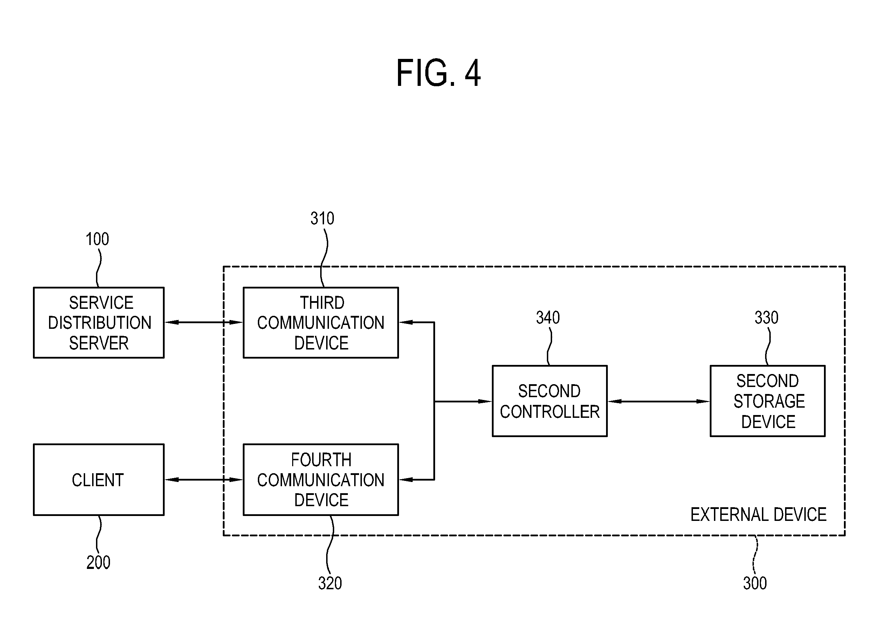

Below, a service distribution system will be described in detail with reference to FIG. 3 showing a control block diagram of the service distribution server 100 and FIG. 4 showing a control block diagram of the external device 300.

As shown in FIG. 3, the service distribution server 100 includes a first communication unit 110, a second communication unit 120, a first storage unit 130, and a first controller 140 which controls the first and second communication units 110, 120 and the first storage unit 130. The first controller 140 may be, but is not limited to, a general purpose controller, a dedicated controller, a processor, a microprocessor, a computer, or a microcomputer.

The first communication unit 110 includes an interface capable of communicating with the client 200, and receives a service request from the client 200 or transmits a service result corresponding to the service request through the interface to the client 200. For example, the interface may include representational state transfer (REST), simple object access protocol (SOAP), Java script, or other web technology based open application programming interface (API).

The second communication unit 120 includes an interface capable of communicating with a plurality of external devices 300 providing services, and transmits a service request from the client 200 or receives a service result corresponding to the service request through the interface from the plurality of external devices 300. For example, the interface may include representational state transfer (REST), simple object access protocol (SOAP), Java script, or other web technology based system application programming interface (API).

The first storage unit 130 stores information about the client 200 and information about the plurality of services.

The information about the client includes at least one of identification information and location information of embedded program information of the client. The identification information of the client 200 is basic information for distinguishing the client 200 from other clients 200, which may include information about the kind of electronic device, a manufacturer, product date, product number, language setting, etc. by way of example. The location information of the client 200 may include information about a location where the client 200 is used. The embedded program information of the client 200 may include information about the kind of program (widget, application, firmware, software, etc.) embedded in the client 200, version, whether it is updated, etc. Thus, the first storage unit 130 can store all the available information about the client 200.

The information about the plurality of services includes at least one of a list of the plurality of services, the kinds of the plurality of services, and information about the plurality of external devices providing the plurality of services. The list of the plurality of services is categorized with respect to at least one of the kinds of service, countries to which the client 200 belongs, languages set to the client 200, and the kind of devices to which the client 200 belongs.

The kind of plurality of services may include various Internet or web based services such as a provision of new contents and/or an update of the contents. The contents may include a widget; an application; firmware; a software program; digital contents, multimedia contents, and advertisement containing audio/video; etc. Also, the update of contents may include correction for an error/bug of the existing contents.

According to another exemplary embodiment, the first storage 130 may store a service module for providing a different kind of services from the service provided by the external device 300. Thus, if the first controller 140 determines that the service requested by the client 200 is implemented by the service module stored in the first storage unit 130, a service result implementing the service corresponding to the requested service of the client can be directly transmitted to the client 200.

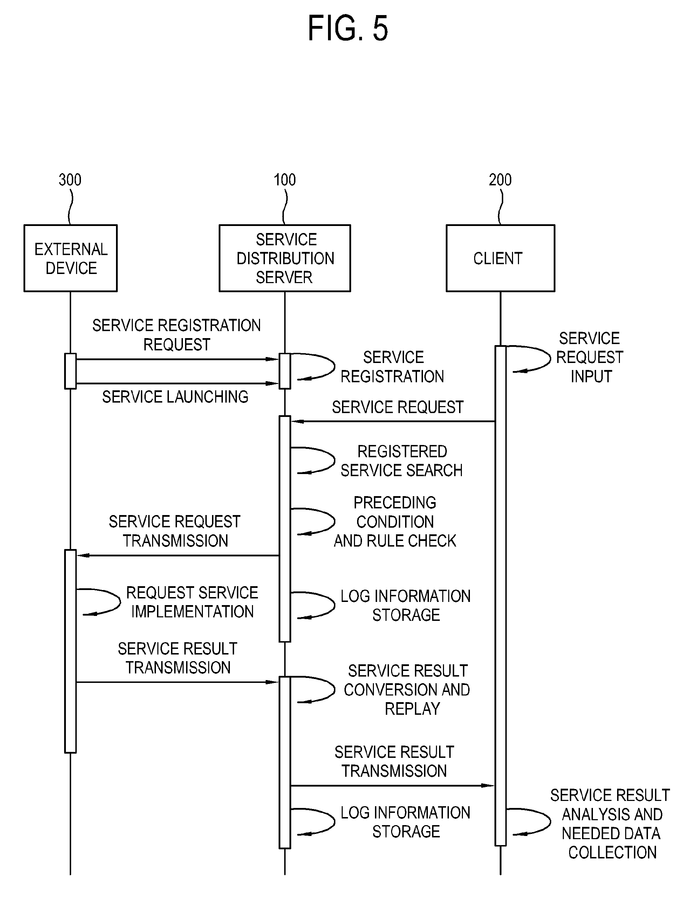

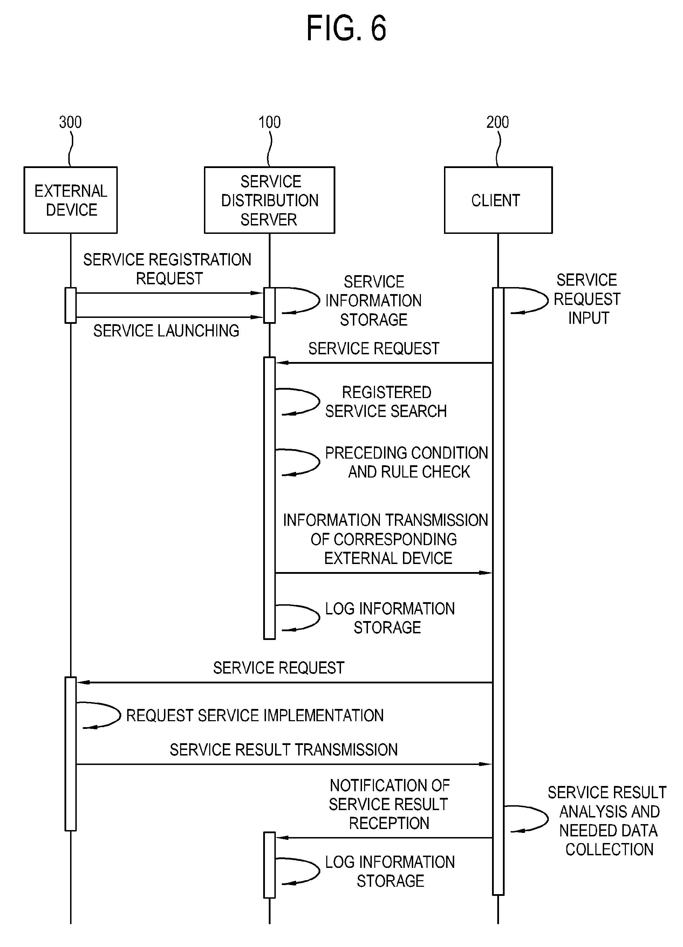

When receiving the service request from the client 200, the first controller 140 selects one among the plural services on the basis of information about the client 200 and the requested service, and controls the first communication unit 110 and the second communication unit 120 so that the external device 300 providing the selected service among the plurality of external devices 300 respectively providing the plurality of services can perform the requested service. The control operation of the first controller 140 will be described in detail with reference to FIGS. 5 and 6.

As shown in FIG. 4, the external device 300 includes a third communication unit 310, a fourth communication unit 320, a second storage unit 330 and a second controller 340 controlling the third and fourth communication devices 310, 320 and the second storage device 330. The second controller 340 may be, but is not limited to, a general purpose controller, a dedicated controller, a processor, a microprocessor, a computer, or a microcomputer.

The third communication unit 310 includes an interface capable of communicating with the service distribution server 100, implements the service corresponding to the request of the client 200 received from the service distribution server 100, and transmits the service result to the service distribution server 100. For example, the interface includes REST, SOAP, Java script, and other web technology based system API.

The fourth communication unit 320 includes an interface capable of communicating with the client 200, implements the service corresponding to a service request if receiving the request from the client 200, and transmits the service result to the client 200. For example, the interface includes REST, SOAP, Java script, and other web technology based open API.

The second storage unit 330 stores data about at least one service provided by the external device 300.

The service may include various Internet or web based services such as a provision of new contents and/or an update of the contents. The contents may include a widget; an application; a firmware; a software program; digital contents multimedia contents, and advertisement containing audio/video; etc. Also, the update of contents may include correction for an error/bug of the existing contents. The data about the service may be in the form of an internal algorithm for providing the service. Also, the data about the service may include a condition of a client to which the service can be provided, for example, the kind of device, a program version, a setting language, a setting location or country, etc. Further, the data about the service may include data needed for achieving a control system for providing and managing the service.

When receiving a service request of a client through the third communication unit 310 or the fourth communication unit 320, the second controller 340 implements a service corresponding to the requested service and transmits a service result to the client 300. The control operation of the second controller 340 will be described in detail with reference to FIGS. 5 and 6.

FIG. 5 is a flowchart showing a control operation of a service distribution system according to an exemplary embodiment.

The external device 300 requests a service desired to be provided to a client, to be registered to the service distribution server 100 through the system API. As requested by the external device 300 to register the service, the service distribution server 100 registers the service. That is, the service distribution server 100 stores information about the service in the first storage unit 130 on the basis of the request for the registration. The information about the service may include the kind of corresponding service, a condition of a client capable of receiving the corresponding service, etc. If the service is completely registered, the external device 300 can provide the service. Such a procedure of registering the service may be applied even when the corresponding external device 300 registers a new service. Also, other plural external devices 300 having a desire to provide services have to undergo the same procedure of registering the service. Thus, the service distribution server 100 can have the information about the service to be provided to the client 200.

Further, when the external device 300 modifies a service previously registered in the service distribution server 100 for reasons of an error/bug, etc. the service distribution server 100 may be requested to update the previously registered service on the basis of the modification, thereby updating the information about the previously registered service on the basis of the request and storing it in the first storage unit 130.

When a user inputs a service request to the client 200, the client 200 transmits the service request to the service distribution server 100 through the open API. For example, the service request may be given in the form of a hypertext transfer protocol (HTTP) having an REST header, and the service request may include information about the client 200 such as Geo IP, parameters, etc.

When receiving the service request through the first communication unit 110, the first controller 140 of the service distribution server 100 authenticates the client 200 that requests the service. Here, the client 200 may be authenticated as the service distribution server 100 requests and receives an identification number of the client 200 or as the client 200 transmits the identification number together with the service request. However, the method of authenticating the client 200 is not limited thereto, and alternatively any known method may be used. The first controller 140 of the service distribution server 100 may collect information about the client 200 from the data stored in the first storage unit 130 on the basis of the received identification number of the client 200. Also, the first controller 140 of the service distribution server 100 extracts and analyzes the REST header contained in the service request, and determines what kind of job is required by the service requested by the client 200. Also, it is possible to determine the location information or the like of the corresponding client 200 on the basis of the parameter or the Geo IP contained in the service request. Accordingly, the first controller 140 of the service distribution server 100 searches the registered service on the basis of the information about the client 200 and the service request in accordance with the data stored in the first storage unit 130. That is, the first controller 140 searches the service that meets the conditions of the client 200 and the service request. The search of the service involves a preceding condition and rule check for providing the corresponding service. Through this procedure, the first controller 140 of the service distribution server 100 selects the most adaptive service to the service request of the client 200 among the registered services, and transmits the service request of the client 200 to the external device 300 capable of providing the selected service through the system API.

If the external device 300 receives the service request from the service distribution server 100, the second controller 340 of the external device 300 implements the corresponding service in response to the request and outputs the service result, thereby transmitting the service result to the service distribution server 100 through the system API.

If receiving the service result from the external device 300, the service distribution server 100 converts and replays the service result so as to be transmitted to the client 200 and then transmits the service result to the client 200 through the open API.

The client 200 analyzes the service result received from the service distribution server 100 and collects needed data.

The service distribution server 100 may store all records of communication with the external device 300 and the client 200 as log information in the first storage unit 130.

Referring back to FIG. 2, assume that each external device 300 provides one service. The first to N external devices 300-1 to 300-N register their respective services to the service distribution server 100 through the foregoing registration procedure. Thus N registered services provided by N external devices are registered with the service distribution server 100. If the service distribution server 100 receives the second service request from the second client 200-2 (411), the service distribution server 100 searches N registered services on the basis of the request of the second client 200-2 and the second service, and selects the most adaptive service to the second service 2 requested by the second client 200-2. As a result, if the service provided by the second external device 300-2 is selected, the service distribution server 100 transmits the second service request of the second client 200-2 to the second external device 300-2 (412), and receives the service result corresponding to the second service request (413). The service distribution server 100 transmits the received service result to the second client 200-2 (414), thereby completing the provision of the service.

FIG. 6 is a flowchart showing a control operation of a service distribution system according to another exemplary embodiment.

The embodiment illustrated in FIG. 6 has the same procedure as that shown in FIG. 5 for selecting the adaptive service among the registered services with regard to the service request from the client 200. Differences from the embodiment of FIG. 5 are as follows. The first controller 140 of the service distribution server 100 transmits information about the corresponding external device 300 capable of providing the selected service to the client 200 through the open API. The client 200 directly transmits the service request to the external device 300 on the basis of the received information about the external device 300, and the external device 300 directly sends the client 200 the service result obtained by implementing the service corresponding to the request.

Likewise, the service distribution server 100 in this exemplary embodiment may also store all records of communication with the external device 300 and the client 200 as log information in the first storage 130.

In the service distribution system according to an exemplary embodiment, the plurality of services are substantially distributed and provided by the plurality of external devices 300, and the service distribution is based on the determination of the first controller 140 provided in the service distribution server 100. Referring to FIG. 2, the service distribution server 100 can provide all the plurality of services requested by the plurality of clients 200, but the plurality of services are respectively implemented by the plurality of external devices 300, so that the service distribution server 100 can have an improved efficiency in providing the service without a heavy burden. Also, even though many new services are added or a service containing an algorithm involving many operations is added, a burden on the service distribution server 100 is not heavy.

Also, if the first service provided by the first external device 300-1 has to be modified or updated for reasons of an error/bug or the like, it does not have an effect on the second to N services provided by the second to N external devices 300-2, ..., 300-N. Accordingly, the modification, the update or the like management of each service has no effect on providing other services.

Also, general and unified control is possible with respect to the service to be provided to the client 200 through the service distribution server 100.

As described above, according to an exemplary embodiment, a plurality of services provided to a plurality of clients are distributed by a service distribution server, so that a burden with complicated services on the server can be distributed. Also, even if one among a plurality of services is improperly designed and the service is thus modified, it has no effect on providing the other services. Further, although one among the plurality of services is upgraded or updated, or although a new service is added, it has no effect on providing the existing other services.

Although a few preferred embodiments have been shown and described, it will be appreciated by those skilled in the art that various changes and modifications might be made without departing from the scope of the invention, as defined in the appended claims.

## Claims

1. A service distribution server comprising:
a first communication unit which communicates with a client;
a second communication unit which communicates with a plurality of external devices which respectively provide a plurality of services; and
a first controller which selects one among the plurality of services based on information about the client and a requested service in response to the first communication unit receiving a service request from the client, and controls the first communication unit and the second communication unit to cause an external device providing the selected service among the plurality of external devices to implement the requested service.

2. The service distribution server according to claim 1, wherein the first controller controls the second communication unit to transmit the service request to the external device providing the selected service and receive from the external device a service result corresponding to the request, and controls the first communication unit to transmit the received service result to the client.

3. The service distribution server according to claim 1 or 2, wherein the first controller controls the first communication unit to transmit information about an external device providing the selected service to the client, and the client directly transmits the service request to the external device and directly receives a service result corresponding to the request.

4. The service distribution server according to any preceding claim, further comprising a first storage unit which stores information about the client and information about the plurality of services, wherein the information about the client comprises at least one of identification information, location information, and embedded program information of the client, and the information about the plurality of services comprises at least one of a list of the plurality of services, kinds of the plurality of services, and information about the plurality of external devices providing the plurality of services.

5. The service distribution server according to any preceding claim, wherein the list of the plurality of services is categorized with respect to at least one of a kind of service, countries to which the client belongs, languages set to the client, and a kind of devices to which the client belongs.

6. The service distribution server according to any preceding claim, wherein the first controller controls the first communication unit to request and receive an identification number of the client when receiving a service request from the client, and controls the first storage unit to collect information about the client based on the received identification number of the client.

7. The service distribution server according to any preceding claim, wherein the first controller controls the first storage unit to store information about the plurality of services in response to a request when receiving the request for registering the plurality of corresponding services from the plurality of external devices.

8. The service distribution server according to any preceding claim, wherein the first controller controls the first storage unit to update information about a service in accordance with modification if one of the plurality of external device modifies a corresponding service previously stored in the first storage unit.

9. The service distribution server according to any preceding claim, wherein:
the service comprises at least one of a provision of contents and an update of contents,
and
the contents comprise at least one of a widget, an application, a firmware, a software program, digital contents, and multimedia contents.

10. A method of controlling a service distribution server communicating with a client and a plurality of external devices which respectively provide a plurality of services, the method comprising:
receiving a service request from a client;
selecting one of the plurality of services based on information about the client and the requested service; and
controlling an external device which provides the selected service among the plurality of external devices to implement the requested service.

11. The method according to claim 10, wherein the controlling comprises transmitting the service request to the external device providing the selected service; receiving from the external device a service result corresponding to the request; and transmitting the received service result to the client.

12. The method according to claim 10 or 11, wherein the controlling comprises controlling transmitting information about an external device which provides the selected service to the client, and the client directly transmitting the service request to the external device and directly receiving a service result corresponding to the request.

13. The method according to any preceding claim, further comprising storing information about the client and information about the plurality of services, wherein the information about the client comprises at least one of identification information, location information, and embedded program information of the client, and the information about the plurality of services comprises at least one of a list of the plurality of services, the kinds of the plurality of services, and information about the plurality of external devices providing the plurality of services.

14. The method according to any preceding claim, wherein the list of the plurality of services are categorized with respect to at least one of the kind of service, countries to which the client belongs, languages set to the client, and the kind of devices to which the client belongs.

15. The method according to any preceding claim, wherein the receiving the service request comprises
requesting and receiving an identification number of the client requesting the service; and collecting information about the client based on the received identification number of the client.
